# EUROPÄISCHE PATENTSCHRIFT

(11) **EP 1 587 117 B1**
(45) Veröffentlichungstag und Bekanntmachung des Hinweises auf die Patenterteilung: **31.10.2007**
(21) Anmeldenummer: 04008790.0
(22) Anmeldetag: 13.04.2004
(51) Int. Cl.: H01H 13/14, H01H 9/16, B60Q 3/00, B60R 7/06

(54) **Einbaugerät**
Built-in apparatus
Appareil integré

(43) Veröffentlichungstag der Anmeldung: 19.10.2005
(73) Patentinhaber: Delphi Technologies, Inc., Troy, MI 48098 (US)
(72) Erfinder: Bienefeld, Axel, 90587 Obermichelbach (DE)
(74) Vertreter: Manitz, Finsterwald & Partner GbR

(56) Entgegenhaltungen:
- DE-A- 1 655 085
- DE-A- 10 147 254
- DE-U- 9 205 969
- US-A- 5 264 670
- PATENT ABSTRACTS OF JAPAN Bd. 0010, Nr. 68 (M-024), 4. Juli 1977 (1977-07-04) & JP 52 015032 A (TOYOTA MOTOR CORP), 4. Februar 1977 (1977-02-04)

## Beschreibung

Die vorliegende Erfindung betrifft ein elektronisches Einbaugerät für ein Kraftfahrzeug wie z.B. ein Autoradio, ein Navigationssystem oder ein Telematiksystem.

Aus der DE 16 55 085 A ist ein Drucktastenschalter für ein Kraftfahrzeug bekannt, dessen Betätigungsfläche in Ausschaltstellung in etwa mit der Oberfläche eines Instrumentenbrettes abschließt und in Einschaltstellung aus dem Instrumentenbrett herausragt. Der Drucktastenschalter ist mit einer Lampe versehen und besitzt ein Fenster, aus dem Licht der Lampe austreten kann. In der Ausschaltstellung des Drucktastenschalters liegt das Fenster abgedeckt hinter einer Frontfläche des Instrumentenbrettes. In der Einschaltstellung des Druckschalters kann Licht durch das Fenster in den Fahrgastraum austreten. Die Lampe kann als Leselampe verwendet werden.

Üblicherweise sind Leselampen für Fahrer und/oder Beifahrer in Kraftfahrzeugen im Fahrzeughimmel integriert. Bei dem Betrieb einer solchen Leselampe kann jedoch der Fahrer geblendet und/ oder sein Nachtsichtvermögen reduziert werden. Durch unerwünschte Reflexionen auf der Windschutzscheibe kann die Sicht zusätzlich beeinträchtigt werden.

Es ist eine Aufgabe der vorliegenden Erfindung, eine Leselampe so in einem Fahrzeug unterzubringen, dass der Fahrer bei angeschalteter Leselampe möglichst wenig geblendet wird.

Diese Aufgabe wird durch die Merkmale des Anspruchs 1 gelöst und insbesondere dadurch, dass eine Leselampe in ein elektronisches Einbaugerät mit einer Frontblende integriert ist, wobei die Leselampe ein im Wesentlichen nur seitlich und/oder unterhalb der Leselampe liegendes Lichtfeld erzeugt.

Elektronische Einbaugeräte der oben genannten Art sind in Kraftfahrzeugen üblicherweise unterhalb der Windschutzscheibe angeordnet. Ein seitlich und/oder unterhalb der Leselampe liegendes Lichtfeld kann daher keine unerwünschten Reflexionen an der Windschutzscheibe erzeugen.

Die Leselampe und das von ihr ausgehende Lichtfeld befinden sich zudem weit unterhalb des Sichtfeldes des Fahrers, so dass dieser nicht geblendet wird.

Der Fahrer kann also die Leselampe während der Fahrt eingeschaltet lassen, ohne dass seine Sicht dadurch beeinträchtigt würde, und kann dann im Stau oder an einer Ampel wartend beispielsweise eine Landkarte betrachten, ohne Zeit mit dem Einschalten einer Leselampe zu verlieren. Insbesondere für einen Beifahrer ist das erfindungsgemäße elektronische Einbaugerät von Vorteil, da er eine Landkarte, einen Reiseführer oder Ähnliches während der Fahrt beleuchten und lesen kann, ohne dass die Sicht des Fahrers dadurch beeinträchtigt wird.

Erfindungsgemäß ist die Leselampe zwischen zwei Positionen beweglich, wobei sie in einer Position in der Frontblende des Einbaugeräts zumindest überwiegend versenkt ist und in der anderen Position über die Frontblende hinausragt. Die Leselampe kann also, insbesondere wenn sie nicht in Betrieb ist, in der Frontblende des Einbaugeräts vollständig oder zumindest überwiegend versenkt sein, und somit optisch wie auch mechanisch in dem Einbaugerät verschwinden. In diesem Fall ist sie auch vor Stößen und sonstigen äußeren Einwirkungen geschützt und ein Fahrzeuginsasse kann das elektronische Einbaugerät bedienen, ohne dass die Leselampe ihm dabei im Weg ist. In der anderen Position der Leselampe, in der diese über die Frontblende des elektronischen Einbaugeräts hinausragt, kann ein seitlich und/oder nach unten gerichtetes Lichtfeld erzeugt werden, welches seinen Mittelpunkt in einer gewissen Entfernung von dem elektronischen Einbaugerät hat. Dadurch kann eine Landkarte oder ein Buch bequem in das von der Leselampe erzeugte Lichtfeld gehalten werden.

Erfindungsgemäß ist eine Schaltvorrichtung vorgesehen, welche die Leselampe ausschaltet, wenn sie in der Frontblende versenkt wird, und sie einschaltet, wenn sie aus dieser in die Frontblende versenkten Position herausbewegt wird. Der Fahrer bzw. Beifahrer muss dann keinen Schalter betätigen, um die Leselampe aus- oder einzuschalten, dies geschieht bereits durch das Bewegen der Leselampe von einer Position in die andere. Falls der Fahrer selbst die Lampe betätigt, wird er auf diese Weise möglichst wenig abgelenkt. Es kann beispielsweise ein Mechanismus vorgesehen sein, der dafür sorgt, dass die Leselampe, wenn sie im in die Frontblende versenkten Zustand leicht in die Frontblende hineingedrückt wird, sich aus einer Verrastung löst, und sich dann mit Hilfe einer Feder in die Position bewegt, in der sie über die Frontblende hinausragt, wobei sie dann gleichzeitig eingeschaltet wird.

Vorteilhafte Ausführungsformen der Erfindung sind in der Beschreibung, den Figuren sowie den Unteransprüchen beschrieben.

Die Leselampe kann an dem elektronischen Einbaugerät verschwenkbar gelagert sein. Insbesondere ist es vorteilhaft, wenn die Leselampe in der Position, in der sie über die Frontblende des Einbaugeräts hinausragt, verschwenkbar gelagert ist. Dies ermöglicht es, die Leselampe entweder in Richtung des Fahrers oder in Richtung des Beifahrers zu verschwenken, so dass je nach Bedarf beide die Leselampe benutzen können.

Nach einer weiteren vorteilhaften Ausführungsform der Erfindung ist eine mechanische Führung vorgesehen, welche die Leselampe beim Versenken in die Frontblende des Einbaugeräts in eine Ausgangsposition verschwenkt. In diesem Fall ist es also nicht nötig, dass der Fahrer bzw. Beifahrer die Leselampe zuerst wieder in ihrer Ausgangsposition verschwenkt und dann in die Frontblende versenkt, sondern das Verschwenken geschieht automatisch, so dass die Leselampe mit einem einzigen Handgriff in die Frontblende des Einbaugeräts zurück versenkt werden kann.

Genauso kann auch eine mechanische Führung vorgesehen sein, welche die Leselampe beim Ausfahren aus der in die Frontblende versenkten Position automatisch verschwenkt. So kann die Leselampe beispielsweise automatisch in eine Position gebracht werden, welche dem Fahrer ein bequemes Betrachten einer Landkarte ermöglicht. Auf diese Weise spart der Fahrer Zeit und wird nicht unnötig vom Führen des Fahrzeugs abgelenkt. Falls eine andere Position der Leselampe erwünscht ist, z.B., weil der Beifahrer sie verwenden möchte, kann sie manuell in diese andere Position verschwenkt werden.

Nach einer bevorzugten Ausführungsform der Erfindung liegt die Leselampe neben Bedienelementen des Einbaugeräts und weist die gleiche Form wie zumindest eines der Bedienelemente auf. Im zumindest überwiegend in die Frontblende versenkten Zustand integriert sich die Leselampe dann unauffällig in die Frontblende, so dass ein harmonisches Gesamtbild entsteht. Bei dem Bedienelement kann es sich beispielsweise um einen drehbaren zylindrischen Lautstärkeregler oder auch um einen Knopf mit rechteckiger Oberfläche handeln.

Als Leuchtmittel können unter anderem Leuchtdioden, Glühlampen oder eine Elektro-Lumineszenz-Folie verwendet werden. Um das Nachtsehvermögen des Fahrers nicht zu beeinträchtigen, ist es besonders vorteilhaft, eine rote Beleuchtung zu wählen. Die Leselampe kann aber auch verschiedenfarbige Leuchtmittel, beispielsweise eine Multi-Color-LED, aufweisen, wobei die Beleuchtungsfarbe vom Benutzer je nach Bedarf und Geschmack ausgewählt werden kann.

Nachfolgend wird die vorliegende Erfindung rein beispielhaft anhand einer vorteilhaften Ausführungsform und unter Bezugnahme auf die beigefügten Zeichnungen beschrieben.

Im Einzelnen zeigen:
- Fig. 1:: ein elektronisches Einbaugerät mit einer Leselampe, welche in der Frontblende versenkt ist, und
- Fig. 2:: das elektronische Einbaugerät von Fig. 1, wobei die Leselampe über die Frontblende hinausragt.

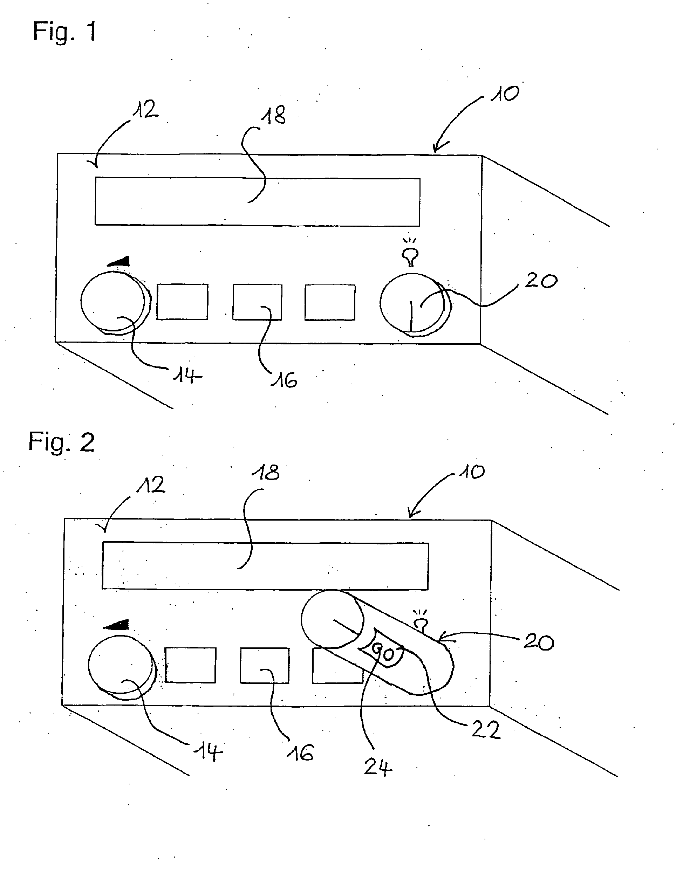

Bei dem in Fig. 1 dargestellten elektronischen Einbaugerät 10 handelt es sich beispielsweise um ein Autoradio mit einer Frontblende 12, in die verschiedene Betätigungselemente 14, 16, ein Display 18 und eine Leselampe 20 integriert sind. Die Leselampe 20 ist im dargestellten Ausführungsbeispiel zylindrisch und kann in einer Aussparung mit korrespondierendem rundem Querschnitt in der Frontblende 12 des elektronischen Einbaugeräts 10 versenkt werden, wie in Fig. 1 dargestellt. Das Betätigungselement 14 ist ein drehbarer Lautstärkeregler mit kreisförmigem Querschnitt. Der Querschnitt der Leselampe 20 entspricht dem Querschnitt des Lautstärkereglers 14. Zudem stehen sowohl die Leselampe 20 in dem in Fig. 1 dargestellten Zustand als auch der Lautstärkeregler 14 etwas über die Frontblende 12 vor. Die Leselampe 20 und der Lautstärkeregler 14 sind außerdem symmetrisch rechts und links in der Frontblende 12 angeordnet.

In Fig. 2 ist das Autoradio 10 aus Fig. 1 gezeigt, wobei die Leselampe 20 nun weiter als der Lautstärkeregler 14 über die Frontblende 12 des Radios 10 hinaus ins Fahrzeuginnere ragt. Um diesen Zustand herbeizuführen, kann ein Benutzer die Lampe 20 in dem in Fig. 1 gezeigten Zustand nach Art eines Tasters in die Frontblende 14 drücken, wodurch diese sich aus einer Verrastung löst und beispielsweise durch die Spannung einer Feder entlang einer Führung aus der Frontblende heraus gleitet. Im Vergleich zu der in Fig. 1 dargestellten Position ist die Leselampe 20 in Fig. 2 um etwa 70° um eine senkrecht zur Frontblende 12 durch die Mitte der Leselampe 20 verlaufende Achse verschwenkt.

Als Leuchtmittel sind zwei Leuchtdioden 24 in den zylindrischen Korpus der Leselampe 20 integriert und von einem rechteckigen, durchsichtigen Fenster 22 verdeckt. In der in Fig. 1 dargestellten Grundposition der Leselampe 20 zeigen die Leuchtmittel nach unten. In der in Fig. 2 dargestellten Position ist die Leselampe 20, wie bereits oben erläutert, um eine senkrecht zur Frontblende 12 durch die Mitte der Leselampe 20 verlaufende Achse verschwenkt, so dass die Leuchtdioden 24 ein schräg rechts unterhalb des Einbaugeräts 10 liegendes Lichtfeld erzeugen.

Die beiden Leuchtdioden 24 können verschieden Farben besitzen so dass der Benutzer durch Einschalten nur einer der Dioden die Farbe der Beleuchtung wählen kann. Alternativ können auch Multi-Color-Leuchtdioden verwendet werden, was ebenfalls ein Wählen der Beleuchtungsfarbe ermöglicht. Hierbei kann die Auswahl der Farbe in beiden Fällen über ein Menü des elektrischen Einbaugeräts 10 erfolgen.

Die Leselampe 20 kann derart geführt sein, dass sie, wenn sie aus der in der Frontblende 12 versenkten Position ausgefahren wird, automatisch in die in Fig. 2 dargestellte Position verschwenkt wird. Auch ist es möglich, sie trotzdem manuell in eine beliebige andere Position zu verschwenken.

Wenn die Leselampe 20 in die Frontblende des Einbaugeräts 10 versenkt wird, wird sie durch einen nicht dargestellten Schalter automatisch ausgeschaltet. Umgekehrt wird die Leselampe 20 beim Herausbewegen aus der in die Frontblende 12 versenkten Position automatisch eingeschaltet.

### Bezugszeichenliste

- 10: elektronisches Einbaugerät
- 12: Frontblende
- 14: Betätigungselement
- 16: Betätigungselement
- 18: Display
- 20: Leselampe
- 22: Fenster
- 24: Leuchtdiode

## Patentansprüche

1. Elektronisches Einbaugerät (10) für ein Kraftfahrzeug mit einer Frontblende (12), in die eine Leselampe (20) integriert ist, welche ein im Wesentlichen nur seitlich und/oder unterhalb der Leselampe (20) liegendes Lichtfeld erzeugt und zwischen zwei Positionen beweglich ist, wobei sie in einer Position zumindest überwiegend in der Frontblende (12) des Einbaugeräts (10) versenkt ist und in der anderen Position über die Frontblende (12) hinaus ragt, wobei eine Schaltvorrichtung vorgesehen ist, welche die Leselampe (20) ausschaltet, wenn sie in der Frontblende (12) versenkt wird, und sie einschaltet, wenn sie aus dieser in die Frontblende (12) versenkten Position herausbewegt wird.

2. Elektronisches Einbaugerät (10) nach Anspruch 1,
**dadurch gekennzeichnet,**
**dass** eine mechanische Führung vorgesehen ist, welche die Leselampe (20) beim Versenken in die Frontblende (12) des Einbaugeräts (10) in eine Ausgangsposition verschwenkt.

3. Elektronisches Einbaugerät (10) nach Anspruch 2 oder 3,
**dadurch gekennzeichnet,**
**dass** eine mechanische Führung vorgesehen ist, welche die Leselampe (20) beim Ausfahren aus der in der Frontblende (12) versenkten Position automatisch verschwenkt.

4. Elektronisches Einbaugerät (10) nach einem der vorstehenden Ansprüche,
**dadurch gekennzeichnet,**
**dass** die Leselampe (20) verschwenkbar gelagert ist.

5. Elektronisches Einbaugerät (10) nach einem der vorstehenden Ansprüche,
**dadurch gekennzeichnet,**
**dass** die Leselampe (20) in der Position, in der sie über die Frontblende (12) des Einbaugeräts (10) hinausragt, verschwenkbar ist.

6. Elektronisches Einbaugerät (10) nach einem der vorhergehenden Ansprüche,
**dadurch gekennzeichnet,**
**dass** die Leselampe (20) Bedienelementen (14, 16) des Einbaugeräts (10) benachbart ist und die gleiche Form wie zumindest eines der Bedienelemente (14) aufweist.

7. Elektronisches Einbaugerät (10) nach einem der vorhergehenden Ansprüche,
**dadurch gekennzeichnet,**
**dass** die Leselampe (20) zumindest ein verschiedenfarbiges Leuchtmittel (24) aufweist und eine Beleuchtungsfarbe vom Benutzer auswählbar ist.

8. Kraftfahrzeug mit einem elektronischen Einbaugerät (10) nach zumindest einem der vorstehenden Ansprüche, wobei das Einbaugerät (10) im Querschnitt gesehen unterhalb einer Horizontalebene angeordnet ist, die durch die Mitte eines Lenkrads des Kraftfahrzeugs verläuft.

## Claims

1. An electronic built-in device (10) for a motor vehicle comprising a front face (12) into which a reading lamp (20) is integrated which generates a light field disposed substantially only to the side of and/or beneath the reading lamp (20) and which is movable between two positions, with it being at least predominantly recessed into the front face (12) of the built-in device (10) in one position and projecting beyond the front face (12) in the other position, with a switching apparatus being provided which switches the reading lamp (20) off, when it is recessed into the front face (12), and switches it on, when it is moved out of this position recessed into the front face (12).

2. An electronic built-in device (10) in accordance with claim 1, **characterized in that** a mechanical guide is provided which pivots the reading lamp (20) into a starting position on being recessed into the front face (12) of the built-in device (10).

3. An electronic built-in device (10) in accordance with claim 2 or claim 3, **characterized in that** a mechanical guide is provided which automatically pivots the reading lamp (20) on its being moved out of the position recessed into the front face (12).

4. An electronic built-in device (10) in accordance with any one of the preceding claims, **characterized in that** the reading lamp (20) is pivotably supported.

5. An electronic built-in device (10) in accordance with any one of the preceding claims, **characterized in that** the reading lamp (20) is pivotable in the position in which it projects beyond the front face (12) of the built-in device (10).

6. An electronic built-in device (10) in accordance with any one of the preceding claims, **characterized in that** the reading lamp (20) is adjacent to operating elements (14, 16) of the built-in device (10) and has the same shape as at least one of the operating elements (14).

7. An electronic built-in device (10) in accordance with any one of the preceding claims, **characterized in that** the reading lamp (20) has at least one differently colored light source (24) and an illumination color can be selected by the user.

8. A motor vehicle comprising an electronic built-in device (10) in accordance with at least one of the preceding claims, wherein the built-in device (10) is arranged, when considered in cross-section, beneath a horizontal plane which extends through the center of a steering wheel of the motor vehicle.

## Revendications

1. Appareil intégré électronique (10) pour un véhicule automobile avec un bandeau frontal (12) dans lequel est intégrée une lampe de lecture (20) laquelle produit un champ lumineux situé sensiblement uniquement sur le côté et/ou au-dessous de la lampe de lecture (20) et est mobile entre deux positions, dans lequel, dans une position, celle-ci est encastrée au moins principalement dans le bandeau frontal (12) de l'appareil intégré (10) et, dans l'autre position, elle dépasse du bandeau frontal (12), dans lequel il est prévu un dispositif de commutation qui désactive la lampe de lecture (20) lorsqu'elle est encastrée dans le bandeau frontal (12), et l'active lorsqu'elle est extraite de cette position encastrée dans le bandeau frontal (12).

2. Appareil intégré électronique (10) selon la revendication 1,
**caractérisé**
**en ce qu'**il est prévu un guide mécanique qui fait pivoter la lampe de lecture (20) dans une position initiale, lors de l'encastrement dans le bandeau frontal (12) de l'appareil intégré (10).

3. Appareil intégré électronique (10) selon la revendication 2 ou 3,
**caractérisé**
**en ce qu'** il est prévu un guide mécanique qui fait pivoter automatiquement la lampe de lecture (20) lorsqu'elle est extraite de la position encastrée dans le bandeau frontal (12).

4. Appareil intégré électronique (10) selon l'une des revendications précédentes,
**caractérisé**
**en ce que** la lampe de lecture (20) est montée pivotante.

5. Appareil intégré électronique (10) selon l'une des revendications précédentes,
**caractérisé**
**en ce que** la lampe de lecture (20) est pivotante dans la position dans laquelle elle dépasse du bandeau frontal (12) de l'appareil intégré (10).

6. Appareil intégré électronique (10) selon l'une des revendications précédentes,
**caractérisé**
**en ce que** la lampe de lecture (20) est voisine d' éléments de commande (14, 16) de l'appareil intégré (10) et présente la même forme qu'au moins l'un des éléments de commande (14).

7. Appareil intégré électronique (10) selon l'une des revendications précédentes,
**caractérisé**
**en ce que** la lampe de lecture (20) comporte au moins un moyen lumineux (24) de couleurs différentes et une couleur d'éclairage peut être sélectionnée par l'utilisateur.

8. Véhicule automobile avec un appareil intégré électronique (10) selon l'une au moins des revendications précédentes, dans lequel l'appareil intégré (10), vu en coupe transversale, est disposé au-dessous d'un plan horizontal qui passe par le milieu d'un volant du véhicule automobile.
